# EUROPEAN PATENT SPECIFICATION

(11) **EP 0 298 706 B1**
(45) Date of publication and mention of the grant of the patent: **07.09.1994**
(21) Application number: 88306127.7
(22) Date of filing: 06.07.1988
(51) Int. Cl.: C08B 37/00, C08B 37/14, A61K 31/725

(54) **Use of glycans in the manufacturing of anti-viral medicaments.**
Verwendung von Glycanen als antivirale Verbindungen.
Utilisation de glycanes dans la préparation de médicaments.

(30) Priority: 07.07.1987 JP 169563/87; 07.07.1987 JP 169564/87; 10.11.1987 JP 283930/87
(43) Date of publication of application: 11.01.1989
(73) Proprietor: AJINOMOTO CO., INC., Tokyo 104 (JP); FUJIREBIO INC., Tokyo 161 (JP)
(72) Inventor: Yamamoto, Naoki, Ube-shi Yamaguchi-ken (JP); Nakashima, Hideki, Nishi-ku Ube-shi Yamaguchi-ken (JP); Uryu, Toshiyuki, Adachi-ku Tokyo (JP); Yoshida, Takashi, Oota-ku Tokyo (JP); Matsuzaki, Kei, Suginami-ku Tokyo (JP); Kaneko, Yutaro, Chuo-ku Tokyo (JP); Mimura, Toru, Chuo-ku Tokyo (JP)
(74) Representative: Armitage, Ian Michael

(56) References cited:
- US-A- 4 590 181
- ARCH OF AIDS RES, vol. 1, no. 1, 1987, pages 45-56; N. YAMAMOTO et al.: "Effect of the sulfated polysaccharides on HIV: a novel strategy of chemical modification for HIV antivirals"
- JOURNAL OF MEDICINAL CHEMISTRY, vol. 30, no. 5, May 1987, pages 810-814, American Chemical Society; K. HATANAKA et al.: "Synthesis of new Heparinoids with high anticoagulant activity"
- CARBOHYDRATE POLYMERS, vol. 2, no. 2, 1982, pages 115-121, Applied Science Publishers Ltd, Barking, Essex, GB; J. HOFFMAN et al.: "Studies on the blood-anticoagulant activity of sulphated polysaccharides with different uronic acid content"
- CHEMICAL ABSTRACTS, vol. 81, 1974, page 394, abstract no. 150306r, Columbus, Ohio, US; & JP-A-74 48 894
- CHEMICAL ABSTRACTS, vol. 83, 1975, page 135, abstract no. 12692d, Columbus, Ohio, US; & JP-A-74 130 478

## Description

The present invention relates to antiviral agents comprising glycans, their derivatives and salts thereof. These agents may for example be used to treat human immunodeficiency virus (HIV or AIDS virus). These antiviral agents are useful as drugs or components thereof, for the prophylaxis and treatment of viral diseases.

Carbohydrate Polymers 2 (1982)115-121 describes in vitro tests in which a variety of sulphated polysaccharides, such as alginic acids, amylose, cellulose, chitosan, curdlan, dextran, guaran, laminaran and locust bean gum, were investigated for anticoagulant activity.

Chemical Abstracts 81 (1974)150306r indicates that sulfated polysaccharides from yeast cell walls are effective against stomach ulcers and arteriosclerosis.

Chemical Abstracts 83 (1975)12692d indicates that sulfated glucans containing β(1→3)glycoside bond structures, such as sulfated glucan from Fomes macgugorii, have activity against blood clotting and inflammation.

US-4,590,181 (McCarthy) discloses that mycodextran sulfates and pustulan sulfates having molecular weights within specified ranges are useful as adjuvants in immunisation against viral disease.

According to the present invention there is provided the use of a substance selected from the following and mixtures thereof;
a curdlan sulfate or a salt thereof;
a glucan sulfuric ester (other than lentinan sulfate) having at least one compound selected from xylose, ribose, galactose, arabinose, glucose and oligomers thereof as a branching side chain on the parent glucan or salt thereof;
a ribopyranan sulfate, a ribofuranan sulfate or salt thereof;
in the manufacture of a medicament for the prophylaxis or treatment of acquired immunodeficiency syndrome.

Preferably, the glucan is a β-1,3 glucan or cellulose. Preferably, the glucans have the side chain located at the 6-position of the glucose unit. The degree of branching of the side chain is preferably 5 to 60 per 100 glucose.

The ribopyranan sulfates, and ribofuranan sulfates which are used as effective components of antiviral agents according to the present invention are known substances and can easily be prepared using known techniques, see for example K. Hatanaka et al. , J. Med. Chem., 1987, vol. 30, No. 5, 810-814; Published Unexamined Japanese Patent Application Nos. 130310/86 and 130302/86. Derivatives containing the basic structures of these compounds can also be prepared by applying conventional techniques known in the art. Furthermore, salts of these compounds and derivatives thereof can be prepared according to known techniques.

The basic structures of these compounds are shown as follows: 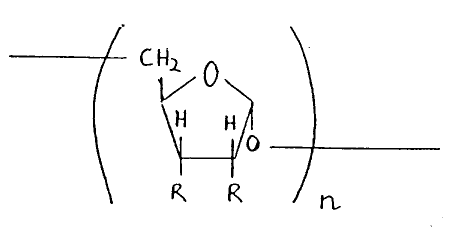
R: OSO₃Na or OH
Ribofuranan sulfates
J. Med. Chemistry, 1987, 30 (5), P. 810-814 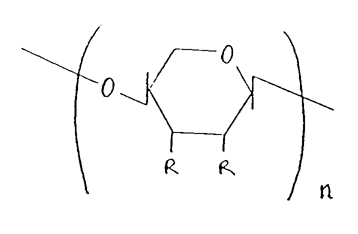
R: OSO₃Na or OH
Ribopyranan sulfates (synthesized)
Other compounds utilised in embodiments of the present invention can be prepared using curdlan (derived from bacteria; β-1,3-glucan) or known glucan derivatives (for example, published unexamined Japanese Patent Application Nos. 130301/86 and 130302/86; K. Hatanaka et al., J. Med. Chem supra).

Examples of the glucan include β-1,3-glucan such as curdlan, pachman, β-(1 → 3)-glucan of yeast cell wall, or β-(1 → 4)-glucan such as cellulose.

Mannopyranose, galactopyranose, arabinofuranose or oligomers thereof such as dimers, or trimers are bound to the side chains of these glucans. The degree of branching (number of branches bound per 100 glycose units) is suitably in the range 5 to 60. To enhance water solubility the branched chain is preferably bound at the 6-position.

Derivatives containing the basic structures of these compounds and salts of both the compounds and the derivatives can be prepared by applying known techniques.

The medicament comprising the antiviral agents according to the present invention may be used in the form of, for example, tablets, capsules, elixirs, microcapsules, liquids, powders or pastes.

The antiviral agents according to the present invention can be administered to a patient in a dose range of 0.01 to 2,000 mg, preferably 0.02 to 500 mg, per person, per day, generally as several individual doses of up to 1,000 mg each. The dose will be varied depending on the severity of disease, body weight of the patient and other factors recognized by practitioners skilled in the art.

The antiviral agents or physiologically acceptable salts thereof can be mixed with vehicles, carriers, excipients, binders, antiseptics, stabilizers, flavours etc. (referred to generally herein as pharmaceutical carriers) to prepare a pharmaceutically acceptable preparation which provides suitable unit doses of the antiviral agent. The amount of the active substance in these preparations is incorporated at a level which gives an appropriate dose, or sub-unit thereof, in the range indicated.

Specific examples of pharmaceutical carriers are: binders such as tragacanth, gum arabic, corn starch or gelatin; excipients such as fine crystalline cellulose; swelling agents such as corn starch, pregelatinized starch and alginic acid; lubricants such as magnesium stearate; sweeteners such as sucrose, lactose or saccharine; flavours such as peppermint, akamono-oil or cherry. Where the pharmaceutically acceptable preparation is in the form of a capsule, liquid carriers such as oils and fats can also be incorporated into the materials described above. A variety of other pharmaceutical carriers may be incorporated as coating agents or as agents to change the physical form of the pharmaceutical preparation. For example, tablets can be coated with shellac and/or sugar. Syrup or elixir may contain sucrose as a sweetener, methyl- and propylparabens as antiseptics and pigments, and flavours such as cherry or orange flavour. For an enteric coating, an 8% aqueous solution of hydroxyphenylmethyl cellulose may be used as a coating pretreatment agent, and then using 10% aqueous solution of hydroxypropylmethyl cellulose phthalate and 3% aqueous solution of polyacetyne as coating agents. These solutions are used according to known techniques. Sterile preparations for injection can be made according to conventional techniques by dissolving or suspending the active antiviral agents together with naturally occurring plant oils such as sesame oil, coconut oil, peanut oil, cotton seed oil, or synthetic fatty vehicle such as ethyl oleate in a vehicle such as water for injection. Buffers, antiseptics, and antioxidants may be added, as necessary.

The present invention will now be described in more detail by referring to specific examples.

### Example 1

### Glycan Derivatives Tested

### Ribofuranan sulfate (molecular weight, 10 x 10³) Prepared according to the method described by K. Hatanaka et al., J. Med. Chem., 1987, 30, 810

### Cells and Virus Used

MT-4 cell (HTLV-I infected human T4 antigen positive cell line)
MOLT-4 cell
HTLV was a particular strain of HIV prepared from the supernatant of cells infected with HIV.

Titer of the viral preparation (6 x 10⁵ plaque formation units/ml) was determined by the plaque assay method using MT-4 cells.

### Anti-HIV Activity

The anti-HIV activity of the glycan derivatives is expressed as HIV-derived cytopathic effect (CPE) and expression of virus-specific antigen.

MT-4 cells were mixed with HIV in 0.002 MOI (multiplicity of infection) followed by incubation at 37°C for 60 minutes. After adsorption of virus, the cells were washed and adjusted to 3 x 10⁵ cells/ml (RPMI 1640 supplemented with 10% bovine fetal serum and antibiotic).

After infection, aliquots of the cell suspension were cultured in the presence of samples of the glycan derivatives at various concentrations. The cells were incubated in a carbon dioxide gas incubator for three days. The medium from each test culture was then exchanged with fresh medium containing the appropriate concentration of the glycan derivative under test. The numbers of surviving viable cells and antigen positive cells (i.e. cells expressing the HIV antigen) were measured by pigment removal (e.g. the trypan blue dye exclusion test) and indirect immunofluorescence (IF) respectively (known techniques).

MOLT-4 and HIVHTLV-IIB-infected MOLT-4 cells were mixed together in a ratio of 9:1 and 1 ml aliquots were adjusted to a concentration of 3 x 10⁵ cells/ml and placed in a series of cell culture wells. The aliquots of the mixed cell suspension were then cultured in the presence of the glycan derivatives at various concentrations, and multinucleated giant cell formation was measured.

### Inhibition of reverse transferase (RT) activity

The inhibition of reverse transferase (RT) was measured with (rA)n.(dT)₁₂₋₁₈ using RT activity as a template-primer.

### Results

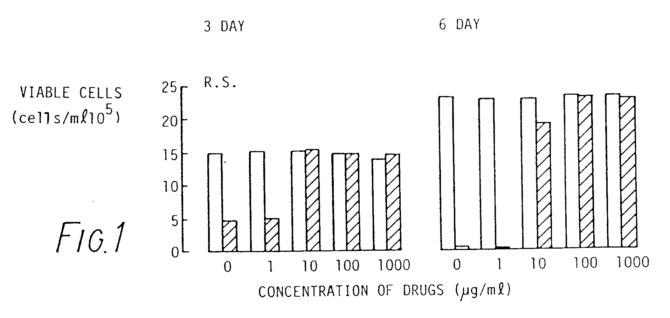

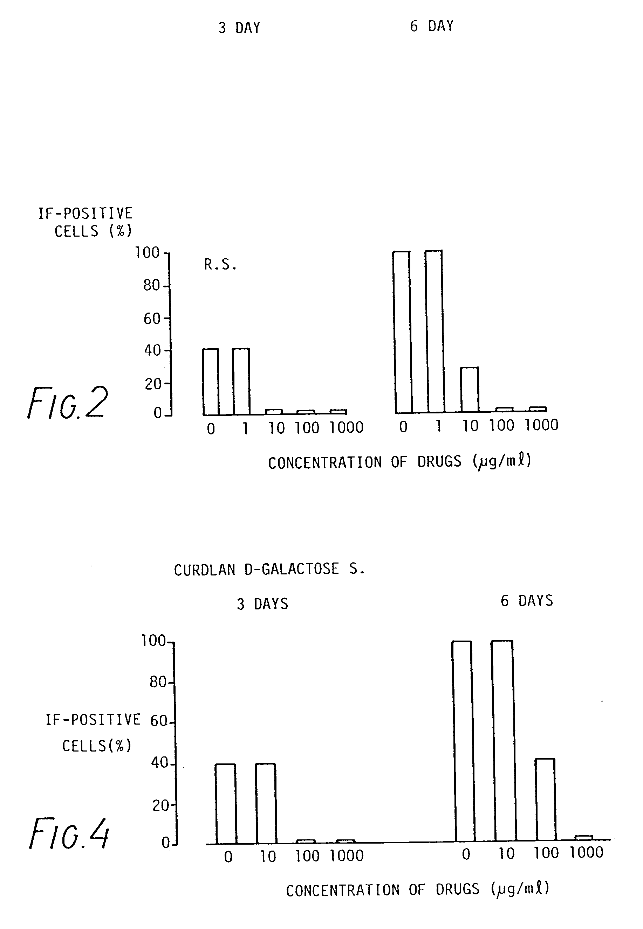

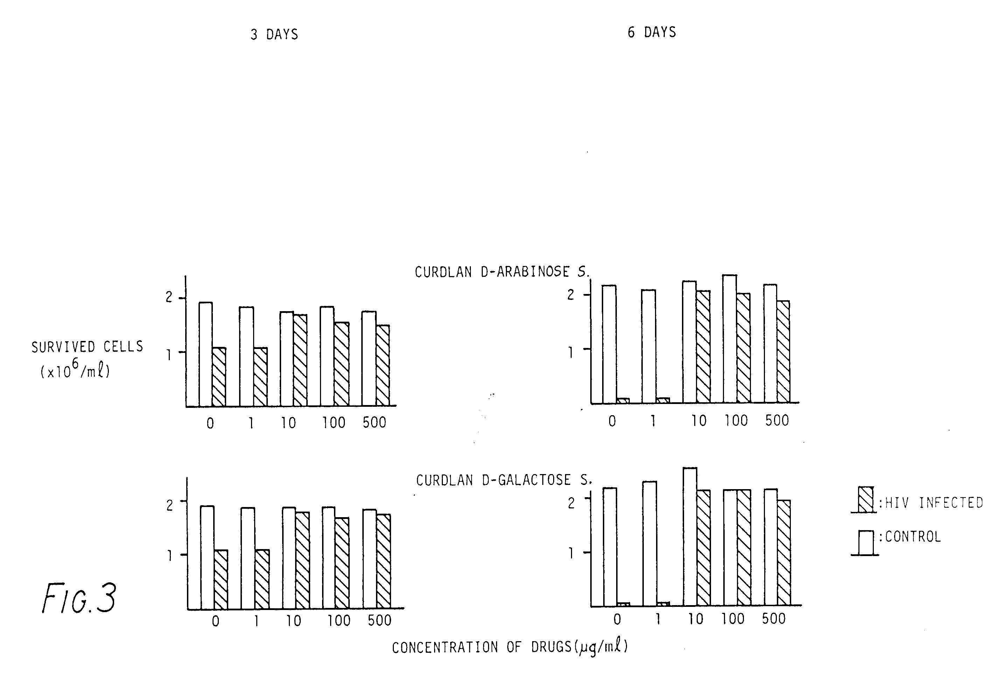

The results of studies on the inhibition of reverse transferase activity are shown in Table 1. The relationship between viable cell count and concentration of glycan derivatives is shown in Figure 1. The relationship between the percentage of IF-positive cells and concentration of glycan derivatives is shown in Figure 2.

**Table 1**

| Inhibitory Effect of Compound of This Invention on RT Activity of AMV and HIV | | |
|---|---|---|
| Concentration (µg/ml) | Ribofuranan Sulfate | |
| | AMV | HIV |
| 0 | - | - |
| 0.1 | 20 | 45 |
| 1 | 34 | 49 |
| 10 | 70 | 52 |
| 100 | 96 | 90 |

The inhibitory activity is expressed as a percentage of the inhibition of RT activity when no sample of glucan derivative was used.

### Preparation of other Sulfates

### Example 2

### Preparation of Lentinan Sulfate

0.100 g of lentinan was dissolved in 35 mls of dimethylsulphoxide (dried over a molecular sieve) and 600 mg of piperidine sulfate was added to the solution. The mixture was stirred at 85 to 90°C for an hour. Then the sulfates formed were neutralized with a saturated aqueous solution of sodium bicarbonate.

The neutralized solution was then dialyzed against 18 litres of saturated aqueous solution of sodium bicarbonate for 6 hours, followed by dialysis against pure water for 72 hours. The dialysate was then concentrated whilst maintaining the temperature at 35°C or less. The concentrated dialysate was then filtered and the sulfates freeze dried. The yield of sulfate was 0.094 g.

Following the method described above for the preparation of lentinan sulfate, 0.100 g of curdlan having a β-galactose as a branch on the side chain thereof, was used in place of lentinan. The sulfate esterification step was repeated in the manner described above to prepare 0.087 g of the sulfate.

Use of 0.50 g of curdlan yielded 0.58 g of the sulfate.

Other glycan sulfates having xylose, ribose, galactose, arabinose, glucose and oligomers thereof as branching side chains thereof, can be prepared according to the described methods giving yields of about 0.1 g.

### Antiviral Activity Test

The anti-HIV activity of the samples prepared above were tested using MT-4 cells infected with HTLV-III where MOI = 0.002, as described in Example 1.

### Results

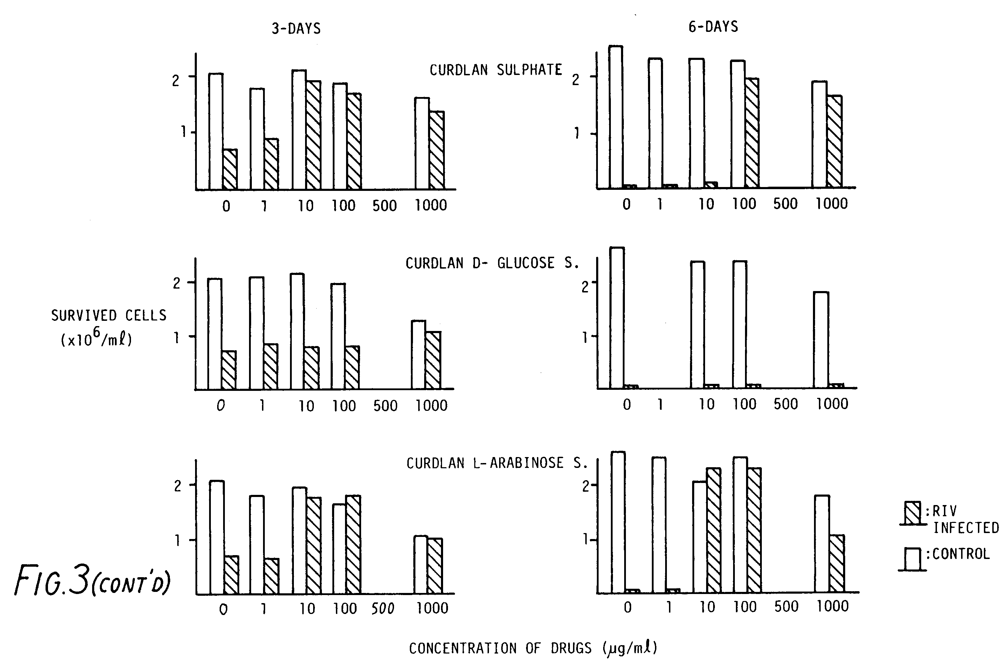

The relationship between viable cell count and concentrations of the various sulfates is shown in Figure 3. The relationship between the percentage of IF positive cells and concentration of the various sulfates is shown in Fig. 4.

## Claims

1. Use of a substance selected from the following and mixtures thereof;
a curdlan sulfate or a salt thereof;
a glucan sulfuric ester (other than lentinan sulfate) having at least one compound selected from xylose, ribose, galactose, arabinose, glucose and oligomers thereof as a branching side chain on the parent glucan or salt thereof;
a ribopyranan sulfate, a ribofuranan sulfate or salt thereof;
in the manufacture of a medicament for the prophylaxis or treatment of acquired immunodeficiency syndrome.

2. A use according to claim 1 wherein the glucan is a β-1,3-glucan or cellulose.

3. A use according to claim 1 or claim 2 wherein the side chain is located at the 6-position of the glucose unit in the glucan.

4. A use according to any one of the preceding claims wherein the branching degree of the side chain is 5 to 60 per 100 glycose units.

5. A use according to claim 1 wherein the substance is a curdlan sulfate or a salt thereof.

## Patentansprüche

1. Verwendung einer Substanz zur Herstellung eines Arzneimittels zur Prophylaxe oder Behandlung von erworbenem Immunschwäche-Syndrom, die unter den folgenden Verbindungen oder Gemischen davon ausgewählt ist:
Curdlansulfat oder einem Salz davon;
Glucanschwefelsäureester (der nicht Lentinansulfate ist) der mindestens eine Verbindung, die unter Xylose, Ribose, Galactose, Arabinose, Glucose und Oligomeren davon ausgewählt ist als Verzweigungsseitenkette des Stamm-Glucans enthält oder einem Salz davon; Ribopyranansulfat, Ribofuranansulfat oder einem Salz davon.

2. Verwendung nach Anspruch 1, wobei das Glucan ein β-1,3-Glucan oder Cellulose ist.

3. Verwendung nach Anspruch 1 oder 2, wobei die Seitenkette in der 6-Position der Glucoseeinheit in dem Glucan angeordnet ist.

4. Verwendung nach einem der vorhergehenden Ansprüche, wobei der Verzweigungsgrad der Seitenkette 5 bis 60 pro 100 Glucoseeinheiten ist.

5. Verwendung nach Anspruch 1, wobei die Substanz ein Curdlansulphat oder ein Salz davon ist.

## Revendications

1. Utilisation d'une substance choisie parmi les suivantes et leurs mélanges :
un sulfate de curdlane ou un sel de celui-ci;
un ester sulfurique de glucane (autre que le sulfate de lentinane) comportant au moins un composé choisi parmi le xylose, le ribose, le galactose, l'arabinose, le glucose et leurs oligomères sous forme d'une chaîne latérale de ramification sur le glucane parental ou un sel de celui-ci;
un sulfate de ribopyranane, un sulfate de ribofuranane ou un sel de celui-ci;
dans la fabrication d'un médicament pour la prophylaxie ou le traitement du syndrome immunodéficitaire acquis.

2. Utilisation selon la revendication 1, dans laquelle le glucane est un β-1,3-glucane ou la cellulose.

3. Utilisation selon la revendication 1 ou la revendication 2, dans laquelle la chaîne latérale est située en position 6 de l'unité de glucose dans le glucane.

4. Utilisation selon l'une quelconque des revendications précédentes, dans laquelle le degré de ranification de la chaîne latérale est de 5 à 60 pour 100 unités de glucose.

5. Utilisation selon la revendication 1, dans laquelle la substance est un sulfate de curdlane ou un sel de celui-ci.
